# NEUE EUROPÄISCHE PATENTSCHRIFT

(11) **EP 3 805 011 B2**
(45) Veröffentlichungstag und Bekanntmachung des Hinweises auf die Entscheidung über den Einspruch: **24.12.2025**
(45) Hinweis auf die Patenterteilung: 24.05.2023
(21) Anmeldenummer: 20211978.0
(22) Anmeldetag: 08.12.2017
(51) Int. Cl.: F16D 65/02, B60B 5/02, B60B 3/14, F16D 65/00

(54) **RAD AUS FASERVERBUNDWERKSTOFF MIT GALVANISCHER ISOLATION**
COMPOSITE WHEEL WITH GALVANIC ISOLATION
ROUE EN MATERIAU COMPOSITE AVEC ISOLATION GALVANIQUE

(30) Priorität: 27.02.2017 DE 102017203172
(43) Veröffentlichungstag der Anmeldung: 14.04.2021
(62) Teilanmeldung aus: 17811571.3
(73) Patentinhaber: Bayerische Motoren Werke Aktiengesellschaft, 80809 München (DE); Action Composites GmbH, 4910 Ried im Innkreis (AT)
(72) Erfinder: JÄGER, Elmar, 87439 Kempten im Allgäu (DE); WERNER, Jens, 01640 Coswig (DE); DRESSLER, Michael, 01159 Dresden (DE)
(74) Vertreter: Prinz & Partner mbB

(56) Entgegenhaltungen:
- EP-A1- 3 576 963
- EP-B1- 3 576 963
- WO-A1-2018/141679
- DE-A1- 10 305 702
- DE-A1- 102008 028 330
- DE-A1- 102011 013 593
- DE-A1- 102013 221 514
- DE-A1- 102015 203 900
- JP-A- H01 215 601
- JP-A- S5 675 201
- US-A1- 2011 089 749
- US-A1- 2014 346 845
- US-A1- 2015 284 836

## Beschreibung

Die Erfindung betrifft ein Rad für ein Fahrzeug, insbesondere für ein Motorrad oder einen Motorroller, gemäß dem Oberbegriff des Patentanspruchs 1.

Aus Gründen der Gewichtsersparnis werden große Anstrengungen unternommen bei Fahrzeugen, insbesondere bei Kraftfahrzeugen, leichtere Bauteile einsetzen zu können. In den letzten Jahren finden daher verstärkt faserverstärkte Kunststoffe Anwendung.

Dieses Konzept wird auch bei Fahrzeugrädern, wie beispielsweise Motorrad-Rädern, umgesetzt. Felge und Speichen können dabei vollständig aus faserverstärktem Kunststoff, insbesondere aus kohlefaserverstärktem Kunststoff, gefertigt sein. Eine entsprechende Radanordnung ist beispielsweise in der DE 10 2014 226 147 A1 beschrieben. In deren Nabenbereich werden dabei an axial entgegengesetzten Seiten des Rades zwei metallische Einsätze in den faserverstärkten Kunststoff eingebettet, die zum Beispiel der Krafteinleitung von einer einseitig angeordneten Bremsscheibe oder zwei beidseitig angeordneten Bremsscheiben dienen. Die beiden voneinander beabstandeten Einsätze werden separat von beiden Seiten des Rads eingefügt.

Ebenso ist aus der US 2014/0346845 A1 ein Rad bekannt, bei dem die Felge und die Speichen aus faserverstärktem Kunststoff hergestellt sind.

Darüber hinaus sind aus der US 2011/0089749 A1 Leichtmetallräder bekannt, die gegen galvanische Korrosion geschützt sind.

Die WO 2018/141679 A1 offenbart zudem ein Rad aus faserverstärktem Kunststoff, bei dem ein metallischer Einsatz zur galvanischen Isolation mit einem Film überzogen ist.

Aufgabe der Erfindung ist es, ein zumindest im Nabenbereich faserverstärktes Rad für ein Fahrzeug, insbesondere ein Motorrad oder ein motorradähnliches Fahrzeug, weiter zu verbessern.

Diese Aufgabe wird gelöst mit Hilfe eines Rades gemäß dem Gegenstand des Patentanspruchs 1. Vorteilhafte Ausführungsformen ergeben sich aus den hiervon abhängigen Patentansprüchen.

Demnach wird ein Rad für ein Fahrzeug, insbesondere für ein Motorrad oder einen Motorroller, mit einem Nabenbereich bereitgestellt, welcher zumindest abschnittsweise aus einem faserverstärkten Kunststoff gebildet ist. Der Nabenbereich weist eine Ausnehmung auf, in welcher ein Einsatz zur Anbindung des Rades an eine Fahrzeugachse des Fahrzeugs angeordnet ist, wobei zwischen dem Nabenbereich und dem Einsatz ein Isolationselement zur galvanischen Isolation des Einsatzes gegenüber dem Nabenbereich angeordnet ist.

Das Rad ist also grundsätzlich für ein Fahrzeug geeignet. Vorzugsweise kann das Fahrzeug ein Motorrad oder ein motorradähnliches Fahrzeug, wie zu Beispiel ein Motorroller, dessen Räder besonders hohen Geschwindigkeitswechseln beziehungsweise Drehmomentwechseln unterworfen sind. Das Rad weist also einen Nabenbereich, der in einem oder mehreren Abschnitten, vorzugsweise vollständig, aus faserverstärktem Kunststoff gefertigt ist. Ebenso können weitere Abschnitte des Rades, wie beispielsweise Speichen und/oder die Felge ebenfalls aus dem faserverstärkten Kunststoff gefertigt sein. Ebenfalls vorzugsweise sind der Nabenbereich, die Speichen und die Felge einstückig aus dem faserverstärkten Kunststoff hergestellt. Anstelle der Speichen kann zum Beispiel auch ein scheibenförmiges Element zur Verbindung zwischen Nabenbereich und Felge in gleicher Weise vorgesehen sein.

Der Einsatz ist je nach Art der Lagerung zur drehfesten oder drehbeweglichen Verbindung mit der Drehachse des Rades vorgesehen. Außerdem kann der Einsatz zur Befestigung eines Antriebsritzels und/oder einer Bremsscheibe ausgebildet sein.

Des Weiteren wird mit Hilfe des Isolationselements eine galvanische Isolation erzeugt, welche den Einsatz und den Nabenbereich voneinander trennt, um eine Kontaktkorrosion zu reduzieren oder sogar vollständig zu unterbinden.

Hierzu kann zum Beispiel das Isolationselement abschnittsweise oder vollständig aus Kunststoff oder faserverstärktem Kunststoff gefertigt sein, wobei Verstärkungsfasern des faserverstärkten Kunststoffs elektrisch nicht-leitende Fasern umfassen, insbesondere Glasfasern, Aramidfasern, Kunststofffasern oder Naturfasern.

Erfindungsgemäß ist das Isolationselement als Isolationsschicht ausgeführt. Es ist durch schichtweises Auftragen des verwendeten Materials auf den Nabenbereich erzeugt.

Des Weiteren kann der Einsatz einen zylinderförmigen oder konischen Verbindungsabschnitt zum Verbinden mit dem Isolationselement umfassen. Zum Beispiel wird die Verbindung mittels einer Mantelfläche des Verbindungsabschnitts bereitgestellt. Optional ist an einer axialen Stirnseite des Verbindungsabschnitts ein Anbindungsabschnitt vorgesehen. Dieser kann zum Beispiel scheibenförmig und zur Anbindung weiterer Fahrzeugelemente, wie einer Bremsscheibe oder eines Antriebsritzels, ausgebildet sein.

Außerdem kann das Isolationselement einen ringförmigen Abschnitt aufweisen, wobei eine radial außenliegende Oberfläche des ringförmigen Abschnitts mit dem Nabenbereich verbunden ist. Dies bedeutet, dass das Isolationselement selbst ringförmig oder zumindest in dem einen Abschnitt ringförmig ausgebildet ist, um den Einsatz gegenüber dem Nabenbereich zu isolieren. Die Verbindung zu dem Nabenbereich ist vorzugsweise drehfest ausgebildet und kann durch einen Stoffschluss, Kraftschluss und/oder Formschluss bereitgestellt sein.

Zum Beispiel kann der ringförmige Abschnitt mit einer radial innenliegenden Oberfläche mit dem Verbindungsabschnitt des Einsatzes verbunden sein. Als radial innenliegende Oberfläche ist die Oberfläche zu verstehen, welche in radialer Richtung des Rades nach innen, also in Richtung der Drehachse des Rades, weist und den Verbindungsabschnitt umgreift, zum Beispiel in einer Umfangsrichtung des Zylinders oder des Konus.

Vorzugsweise sind der Einsatz und das Isolationselement mittels einer formschlüssigen Verbindung miteinander verbunden. Auf diese Weise kann eine drehfeste und gleichzeitig haltbare Verbindung zwischen beiden Elementen zur Übertragung von Drehmomenten bereitgestellt werden.

Beispielsweise kann die formschlüssige Verbindung eine komplementär ineinandergreifende Verzahnung umfassen, die an der radial innenliegenden Oberfläche des Isolationselements und dem Verbindungsabschnitt des Einsatzes ausgebildet ist.

Hierbei kann die komplementär ineinandergreifende Verzahnung durch eine Anzahl von in radialer Richtung gerichteten Fortsätzen gebildet werden, die in korrespondierende Ausnehmungen eingreifen. Entweder sind hierzu die Fortsätze dem Verbindungsabschnitt und die Ausnehmungen der radial innenliegenden Oberfläche des Isolationselements zugeordnet und/oder sind die Fortsätze der radial innenliegenden Oberfläche und die Ausnehmungen dem Verbindungsabschnitt zugeordnet. Explizit ist hierunter auch die Möglichkeit einer gemischten Anordnung zu verstehen, bei der sowohl eine erste Anzahl an Fortsätzen und Ausnehmungen der Oberfläche des Isolationselements und eine zweite Anzahl an Fortsätzen und Ausnehmungen dem Verbindungsabschnitt zugeordnet sind.

Gemäß einer Ausführungsform kann die komplementär ineinandergreifende Verzahnung durch eine wellenförmige, insbesondere sinuswellenförmige, Struktur der radial innenliegenden Oberfläche des Isolationselements und des Verbindungsabschnitts gebildet werden. Dies bedeutet, dass die "Zähne" der Verzahnung durch bogenförmige Fortsätze gebildet werden, die in ebenfalls bogenförmige, komplementär hierzu ausgebildete Ausnehmungen eingreifen. Zur Erzeugung der Sinusform sind auf jedem der beiden Bauteile abwechselnd bogenförmige Fortsätze benachbart zu bogenförmigen Ausnehmungen angeordnet. Aufgrund der Wellenform können lokale Spannungsspitzen besonders effektiv und einfach vermieden werden.

Die Erfindung wird nachfolgend unter Bezugnahme auf die Figuren anhand eines Ausführungsbeispiels näher beschrieben. Es zeigen:
- Fig. 1.:: eine isometrische Ansicht eines Rades gemäß der Beschreibung,
- Fig. 2: eine seitliche, axiale Ansicht eines Nabenbereichs des Rades gemäß Fig. 1, und
- Fig. 3: den Nabenbereich gemäß Fig. 2 in einer teilweisen Explosionsansicht.

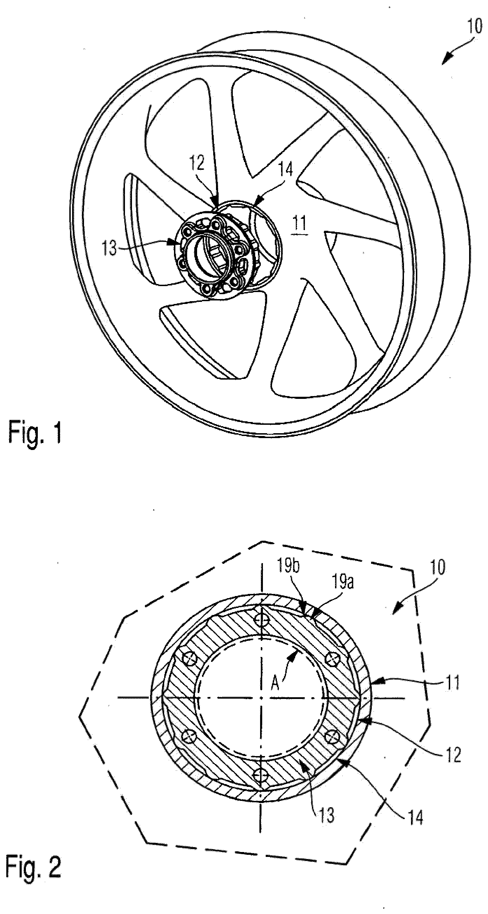

Fig. 1 zeigt eine isometrische Ansicht eines Rades 10 für ein Fahrzeug (nicht dargestellt), insbesondere für ein Motorrad oder einen Motorroller, mit einem Nabenbereich 11, welcher zumindest abschnittsweise aus einem faserverstärkten Kunststoff gebildet ist. Der Nabenbereich 11 weist eine Ausnehmung 12 auf, in welcher ein Einsatz 13 zur Anbindung des Rades 10 an eine Fahrzeugachse A des Fahrzeugs angeordnet werden kann. Des Weiteren ist zwischen dem Nabenbereich 11 und dem Einsatz 13 (zumindest im zusammengesetzten Zustand gemäß Fig. 2) ein Isolationselement 14 zur galvanischen Isolation des Einsatzes 13 gegenüber dem Nabenbereich 11 angeordnet.

Fig. 2 zeigt eine seitliche und detailliertere Ansicht des Nabenbereichs 11 gemäß Fig. 1, wobei der Einsatz 13 zur Anbindung des Rades 10 an die Fahrzeugachse A des Fahrzeugs in der Ausnehmung 12 des Nabenbereichs 11 angeordnet ist. Außerdem ist das zwischen dem Nabenbereich 11 und dem Einsatz 13 angeordnete Isolationselement 14 zur galvanischen Isolation des Einsatzes 13 gegenüber dem Nabenbereich 11 erkennbar. Beispielsweise kann mittels dieser Anordnung der faserverstärkte Kunststoff des Nabenbereichs 11 Kohlefasern umfassen und der Einsatz 13 abschnittsweise oder vollständig aus metallischem Material gefertigt sein, wodurch eine Kontaktkorrosion zwischen den genannten Elementen 11,13 vermieden oder zumindest reduziert werden kann. Hierzu ist das Isolationselement 14 abschnittsweise oder vollständig aus Kunststoff oder faserverstärktem Kunststoff gefertigt, wobei Verstärkungsfasern des faserverstärkten Kunststoffs elektrisch nicht-leitende Fasern umfassen, insbesondere Glasfasern, Aramidfasern, Kunststofffasern oder Naturfasern.

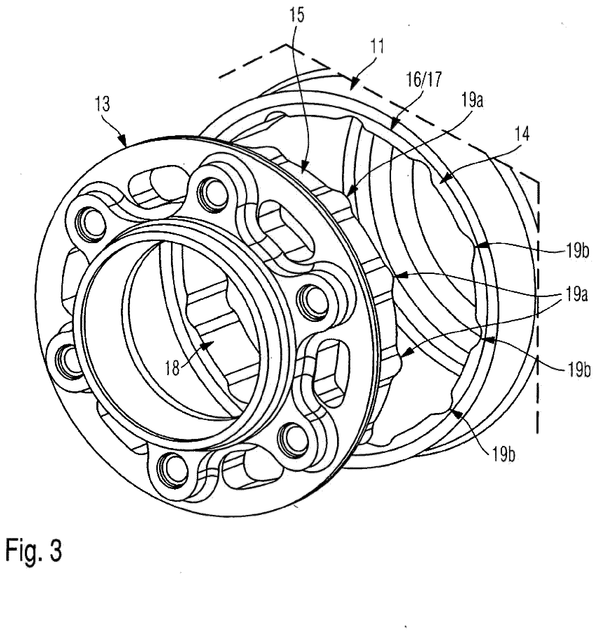

Fig. 3 zeigt ebenfalls den Einsatz 13 und das Isolationselement 14 für das Rad 10 gemäß den Fig. 1 und 2 in vergrößerter Darstellung. Demnach umfasst der Einsatz 13 in der dargestellten Ausführungsform einen zylinderförmigen Verbindungsabschnitt 15 zum Verbinden mit dem Isolationselement 14. Der Verbindungsabschnitt 15 weist hierzu eine in radialer Richtung nach außen (in einer von der Drehachse des Rades 10 weg gerichteten Richtung) gewandte Mantelfläche auf, die von dem Isolationselement 14 beaufschlagt wird. Alternativ und daher nicht dargestellt kann der Verbindungsabschnitt eine konische Form aufweisen und ebenfalls von der entsprechenden Mantelfläche gebildet werden.

Außerdem weist das Isolationselement 14 einen ringförmigen Abschnitt 16 auf, wobei eine radial außenliegende Oberfläche 17 des ringförmigen Abschnitts 16 zur Verbindung mit dem Nabenbereich 11 vorgesehen ist. Der zusammengesetzte Zustand ist in Fig. 2 dargestellt.

Zusätzlich ist der ringförmige Abschnitt 16 des Isolationselements 14 mit einer radial innenliegenden Oberfläche 18 mit dem Verbindungsabschnitt 15 des Einsatzes mittels einer formschlüssigen Verbindung miteinander verbindbar (Fig. 1 und 2) beziehungsweise verbunden (Fig. 2).

Die formschlüssige Verbindung umfasst eine komplementär ineinandergreifende Verzahnung 19, die an der radial innenliegenden Oberfläche 18 des Isolationselements 14 und dem Verbindungsabschnitt 15 des Einsatzes 13 beziehungsweise auf dessen Mantelfläche ausgebildet ist.

Die komplementär ineinandergreifende Verzahnung 19 wird durch eine Anzahl von in radialer Richtung gerichteten Fortsätzen 19a gebildet, die in korrespondierende Ausnehmungen 19b eingreifen, wobei die Fortsätze 19a dem Verbindungsabschnitt 15 und die Ausnehmungen 19b der radial innenliegenden Oberfläche 18 des Isolationselements 14 zugeordnet sind. Selbstverständlich ist ebenso eine umgekehrte Zuordnung möglich, die sich dadurch auszeichnet, dass die Fortsätze 19a der radial innenliegenden Oberfläche 18 und die Ausnehmungen 19b dem Verbindungsabschnitt 15 zugeordnet sind. Ebenso sind gemischte Anordnungen möglich.

## Patentansprüche

1. Rad (10) für ein Fahrzeug, insbesondere für ein Motorrad oder einen Motorroller, mit einem Nabenbereich (11), welcher zumindest abschnittsweise aus einem faserverstärkten Kunststoff gebildet ist, wobei der Nabenbereich (11) eine Ausnehmung (12) aufweist, in welcher ein Einsatz (13) zur Anbindung des Rades (10) an eine Fahrzeugachse des Fahrzeugs angeordnet ist, wobei zwischen dem Nabenbereich (11) und dem Einsatz (13) ein Isolationselement (14) zur galvanischen Isolation des Einsatzes (13) gegenüber dem Nabenbereich (11) angeordnet ist, **dadurch gekennzeichnet, dass** das Isolationselement (14) als Isolationsschicht ausgeführt ist, die durch schichtweises Auftragen des verwendeten Materials auf den Nabenbereich (11) erzeugt ist.

2. Rad (10) nach Anspruch 1, **dadurch gekennzeichnet, dass** der faserverstärkte Kunststoff des Nabenbereichs (11) Kohlefasern umfasst und der Einsatz (13) abschnittsweise oder vollständig aus metallischem Material gefertigt ist.

3. Rad (10) nach Anspruch 1 oder 2, **dadurch gekennzeichnet, dass** das Isolationselement (14) abschnittsweise oder vollständig aus Kunststoff oder faserverstärktem Kunststoff gefertigt ist, wobei Verstärkungsfasern des faserverstärkten Kunststoffs elektrisch nicht-leitende Fasern umfassen, insbesondere Glasfasern, Aramidfasern, Kunststofffasern oder Naturfasern.

4. Rad (10) nach mindestens einem der Ansprüche 1 bis 3, **dadurch gekennzeichnet, dass** der Einsatz (13) einen zylinderförmigen oder konischen Verbindungsabschnitt (15) zum Verbinden mit dem Isolationselement (14) umfasst.

5. Rad (10) nach Anspruch 4, **dadurch gekennzeichnet, dass** das Isolationselement (14) einen ringförmig Abschnitt (16) aufweist, wobei eine radial außenliegende Oberfläche (17) des ringförmigen Abschnitts mit dem Nabenbereich (11) verbunden ist.

6. Rad (10) nach Anspruch 5, **dadurch gekennzeichnet, dass** der ringförmige Abschnitt (16) mit einer radial innenliegenden Oberfläche (18) mit dem Verbindungsabschnitt (15) des Einsatzes (13) verbunden ist.

7. Rad (10) nach mindestens einem der Ansprüche 1 bis 6, **dadurch gekennzeichnet, dass** der Einsatz (13) und das Isolationselement (14) mittels einer formschlüssigen Verbindung (19) miteinander verbunden sind.

8. Rad (10) nach Anspruch 7, **dadurch gekennzeichnet, dass** die formschlüssige Verbindung (19) eine komplementär ineinandergreifende Verzahnung umfasst, die an der radial innenliegenden Oberfläche (18) des Isolationselements (14) und dem Verbindungsabschnitt (15) des Einsatzes (13) ausgebildet ist.

9. Rad (10) nach Anspruch 8, **dadurch gekennzeichnet, dass** die komplementär ineinandergreifende Verzahnung (19) durch eine Anzahl von in radialer Richtung gerichteten Fortsätzen (19a) gebildet wird, die in korrespondierende Ausnehmungen (19b) eingreifen, wobei entweder die Fortsätze (19a) dem Verbindungsabschnitt (15) und die Ausnehmungen (19b) der radial innenliegenden Oberfläche (18) des Isolationselements (14) zugeordnet sind, und/oder die Fortsätze (19a) der radial innenliegenden Oberfläche (18) und die Ausnehmungen (19b) dem Verbindungsabschnitt (15) zugeordnet sind.

10. Rad (10) nach Anspruch 8 oder 9, **dadurch gekennzeichnet, dass** die komplementär ineinandergreifende Verzahnung (19) durch eine wellenförmige, insbesondere sinuswellenförmige, Struktur der radial innenliegenden Oberfläche (18) des Isolationselements (14) und des Verbindungsabschnitts (15) gebildet wird.

## Claims

1. A wheel (10) for a vehicle, in particular for a motorcycle or a motor scooter, comprising a hub portion (11) which is formed at least partially from a fiber-reinforced plastic material, the hub portion (11) having a recess (12) in which an insert (13) for connecting the wheel (10) to a vehicle axle of the vehicle is arranged, an isolation element (14) being arranged between the hub portion (11) and the insert (13) for galvanic isolation of the insert (13) from the hub portion (11), **characterized in that** the isolation element (14) is in the form of an isolating layer which is produced by layered application of the material used onto the hub portion (11).

2. The wheel (10) according to claim 1, **characterized in that** the fiber-reinforced plastic material of the hub portion (11) comprises carbon fibers and the insert (13) is partially or completely produced from metallic material.

3. The wheel (10) according to claim 1 or 2, **characterized in that** the isolation element (14) is partially or completely produced from a plastic material or fiber-reinforced plastic material, with reinforcing fibers of the fiber-reinforced plastic material comprising electrically non-conductive fibers, in particular glass fibers, aramid fibers, plastic fibers or natural fibers.

4. The wheel (10) according to at least one of claims 1 to 3, **characterized in that** the insert (13) comprises a cylindrical or conical connecting portion (15) for connecting to the isolation element (14).

5. The wheel (10) according to claim 4, **characterized in that** the isolation element (14) includes an annular portion (16), a radially external surface (17) of the annular portion being connected to the hub portion (11).

6. The wheel (10) according to claim 5, **characterized in that** the annular portion (16) has a radially internal surface (18) that is connected to the connecting portion (15) of the insert (13).

7. The wheel (10) according to at least one of claims 1 to 6, **characterized in that** the insert (13) and the isolation element (14) are connected to each other by means of a form-fitting connection (19).

8. The wheel (10) according to claim 7, **characterized in that** the form-fitting connection (19) comprises a complementarily interlocking toothing formed on the radially internal surface (18) of the isolation element (14) and the connecting portion (15) of the insert (13).

9. The wheel (10) according to claim 8, **characterized in that** the complementarily interlocking toothing (19) is formed by a number of extensions (19a) directed in the radial direction and engaging in corresponding recesses (19b), wherein either the extensions (19a) are associated with the connecting portion (15) and the recesses (19b) are associated with the radially internal surface (18) of the isolation element (14), and/or the extensions (19a) are associated with the radially internal surface (18) and the recesses (19b) are associated with the connecting portion (15).

10. The wheel (10) according to claim 8 or 9, **characterized in that** the complementarily interlocking toothing (19) is formed by a wave-shaped, in particular sinusoidal wave-shaped, structure of the radially internal surface (18) of the isolation element (14) and of the connecting portion (15).

## Revendications

1. Roue (10) pour un véhicule, en particulier une moto ou un scooter, comportant une zone de moyeu (11) qui est réalisée au moins par tronçons en une matière plastique renforcée par des fibres, la zone de moyeu (11) présentant un évidement (12) dans lequel un insert (13) est agencé pour le raccordement de la roue (10) à un axe de véhicule du véhicule, un élément isolant (14) étant agencé entre la zone de moyeu (11) et l'insert (13) pour l'isolation galvanique de l'insert (13) par rapport à la zone de moyeu (11), **caractérisé en ce que** l'élément isolant (14) est réalisé sous forme de couche isolante qui est produite par une application par couches de la matière utilisée sur la zone de moyeu (11).

2. Roue (10) selon la revendication 1, **caractérisée en ce que** la matière plastique renforcée par des fibres de la zone de moyeu (11) comprend des fibres de carbone et **en ce que** l'insert (13) est fabriqué, par tronçons ou entièrement, en une matière métallique.

3. Roue (10) selon la revendication 1 ou 2, **caractérisée en ce que** l'élément isolant (14) est fabriqué, par tronçons ou entièrement, en une matière plastique ou en une matière plastique renforcée par des fibres, des fibres de renforcement de la matière plastique renforcée par des fibres comprenant des fibres électriquement non-conductrices, en particulier des fibres de verre, des fibres d'Aramide, des fibres plastiques ou des fibres naturelles.

4. Roue (10) selon au moins l'une des revendications 1 à 3, **caractérisée en ce que** l'insert (13) comprend un tronçon de raccordement (15) cylindrique ou conique pour le raccordement à l'élément isolant (14).

5. Roue (10) selon la revendication 4, **caractérisée en ce que** l'élément isolant (14) présente un tronçon annulaire (16), une surface radialement extérieure (17) du tronçon annulaire étant raccordée à la zone de moyeu (11).

6. Roue (10) selon la revendication 5, **caractérisée en ce que** le tronçon annulaire (16) est raccordé par une surface radialement intérieure (18) au tronçon de raccordement (15) de l'insert (13).

7. Roue (10) selon au moins l'une des revendications 1 à 6, **caractérisée en ce que** l'insert (13) et l'élément isolant (14) sont raccordés l'un à l'autre par un raccordement (19) par coopération de formes.

8. Roue (10) selon la revendication 7, **caractérisée en ce que** le raccordement (19) par coopération de formes comprend une denture à engrenage complémentaire qui est réalisée sur la surface radialement intérieure (18) de l'élément isolant (14) et le tronçon de raccordement (15) de l'insert (13).

9. Roue (10) selon la revendication 8, **caractérisée en ce que** la denture (19) à engrenage complémentaire est formée par un nombre de saillies (19a) qui sont orientées dans le sens radial et s'engagent dans des évidements correspondants (19b), les saillies (19a) étant associées au tronçon de raccordement (15) et les évidements (19b) à la surface radialement intérieure (18) de l'élément isolant (14), et/ou les saillies (19a) étant associées à la surface radialement intérieure (18) et les évidements (19b) au tronçon de raccordement (15).

10. Roue (10) selon la revendication 8 ou 9, **caractérisée en ce que** la denture (19) à engrenage complémentaire est formée par une structure ondulée, en particulier sinusoïdale de la surface radialement intérieure (18) de l'élément isolant (14) et du tronçon de raccordement (15).
